# FASCICULE DE BREVET EUROPEEN

(11) **EP 1 739 935 B1**
(45) Date de publication et mention de la délivrance du brevet: **08.09.2010**
(21) Numéro de dépôt: 06116137.8
(22) Date de dépôt: 27.06.2006
(51) Int. Cl.: H04M 1/2745

(54) **Terminal de communication à répertoire téléphonique à données sélectionnables par clés de tri multiples**
Kommunikationsendgerät und Mittel zur Abfrage von Einträgen in einem Telefonbuch
Communication terminal with query-based selection of phonebook entries

(30) Priorité: 27.06.2005 FR 0551772
(43) Date de publication de la demande: 03.01.2007
(73) Titulaire: Alcatel Lucent, 75008 Paris (FR)
(72) Inventeur: ONFROY, Emmanuel, AUBERVILLIERS, 93300 (FR); PAPILLON, Serge, 75014, PARIS (FR); ARAUJO, José, 91100, CORBEIL ESSONNES (FR); RAGOU, Sougandy, 91400, ORSAY (FR)
(74) Mandataire: Sciaux, Edmond

(56) Documents cités:
- EP-A- 0 996 305
- EP-A- 1 211 906
- US-A- 5 903 632
- US-B1- 6 389 278

## Description

L'invention concerne les terminaux de communication, et plus précisément les répertoires (ou annuaires) téléphoniques électroniques que comportent de tels terminaux.

On entend ici par « terminal de communication » (ci-après appelé terminal), tout équipement de communication, radio ou filaire, fixe ou mobile (ou portable) capable de se connecter à au moins un réseau de communication, afin d'échanger des données sous la forme de signaux, soit avec un autre terminal ou équipement de réseau, via leur(s) réseau(x) de rattachement, soit avec son propre réseau de rattachement. Il pourra donc s'agir, par exemple, de téléphones fixes ou mobiles, ou d'ordinateurs fixes ou portables ou d'assistants personnels numériques (ou PDA) équipés d'un module de communication.

De très nombreux terminaux disposent de moyens de mémorisation stockant des données définissant un répertoire (ou annuaire) téléphonique privé de type électronique. Ces répertoires comportent généralement des premières données représentatives d'identifiants d'entités, comme par exemple des personnes physiques ou morales, des activités ou des services, en correspondance de deuxièmes données représentatives d'identifiants de communication, comme par exemple des numéros de téléphone.

Ces répertoires permettant de classer des entités en fonction d'un critère alphabétique, ils sont donc particulièrement pratiques lorsqu'ils sont utilisés pour rechercher rapidement une entité déjà connue. Mais ils s'avèrent mal adaptés lorsqu'il s'agit de rechercher une entité en fonction d'un besoin particulier.

Par exemple, un répertoire peut comporter les noms de plusieurs personnes ou entreprises capables d'assurer un service particulier, comme une intervention de serrurerie. Lorsqu'un utilisateur a besoin de joindre rapidement une telle entité, afin qu'elle procède à une intervention dans une zone géographique choisie, le répertoire est muet quant à sa localisation par rapport à cette zone géographique d'intervention. L'utilisateur peut alors être obligé d'établir plusieurs communications avant de trouver l'entité adaptée à l'intervention.

Un autre exemple concerne les cas dans lesquels un utilisateur doit joindre en urgence une entité pour l'avertir d'un problème, tel qu'un problème de santé ou une agression. En fonction de la gravité de la situation, l'utilisateur peut avoir besoin de joindre un assistant local, un voisin, son médecin traitant (ou la police de son quartier), ou un service d'intervention d'urgence, tel que le SAMU ou Police Secours. Or, dans ces situations l'utilisateur doit rechercher lui-même parmi les entités que comprend son répertoire le nom de l'entité qui est adaptée à la situation, alors même qu'il peut ne pas être en mesure de procéder à une telle recherche.

Il a également été proposé, dans le brevet US 6,389,278, de télécharger auprès de fournisseurs de services des répertoires comportant des premières données représentatives d'identifiants d'entités, comme par exemple des personnes physiques ou morales, en correspondance de deuxièmes données représentatives d'identifiants de communication, comme par exemple des numéros de téléphone, et de roisièmes donnéesquatrièmes données représentatives de services, activités ou fonctions assuré(e)s par les entités. Une fois que l'utilisateur a téléchargé un répertoire dans son terminal il doit alors manuellement sélectionner l'une des entités qu'il contient pour tenter d'établir une communication avec lui. En cas d'échec, le répertoire est de nouveau affiché afin que l'utilisateur puisse effectuer manuellement une nouvelle sélection, s'il le désire. L'inconvénient principal de cette solution réside dans le fait qu'elle ne permet pas une procédure automatisée de sélection d'entité, particulièrement utile en cas d'urgence. Par ailleurs, lorsque les répertoires téléchargés concernent une zone géographique particulière, celle-ci est définie par le fournisseur de service, et non par l'utilisateur, si bien qu'elle s'avère rarement adaptée aux réels besoins de l'utilisateur en cas d'urgence.

L'invention a donc pour but d'améliorer la situation, et notamment de faciliter la sélection d'une entité, stockée dans un répertoire électronique, en fonction des besoins.

Elle propose à cet effet un terminal de communication comportant :
i) une interface homme/machine permettant d'afficher des données sur un écran et de naviguer parmi ces données affichées afin de permettre à un utilisateur de sélectionner certaines d'entre elles,
ii) des moyens de mémorisation propres à stocker des premières données représentatives d'identifiants d'entités, en correspondance de deuxièmes données représentatives d'identifiants de communication, de troisièmes données représentatives des services, activités, ou fonctions, assuré(e)s par lesdites entités, de quatrièmes données représentatives des zones géographiques dans lesquelles sont implantées lesdites entités, et de cinquièmes données représentatives de niveaux de priorité associés auxdites entités représentées par lesdites premières données,et
iii) des moyens de gestion agencés pour accéder aux données stockées dans lesdits moyens de mémorisation afin d'alimenter ladite interface avec certaines au moins desdites données stockées, lesdits moyens de gestion étant agencés pour sélectionner, dans lesdits moyens de mémorisation, des premières données qui satisfont, conjointement avec lesdites quatrièmes données correspondantes à des clés de tri relatives à au moins un service, une activité ou une fonction et à au moins une zone géographique, et, en présence de premières données représentatives d'au moins deux entités satisfaisant auxdites clés de tri, pour choisir celles qui représentent l'entité disposant du niveau de priorité le plus élevé.

Ce terminal se caractérise par le fait que lesdits moyens de gestion sont agencés pour permettre à un utilisateur de définir des clés de tri via ladite interface homme/machine.Le terminal selon l'invention peut comporter d'autres caractéristiques qui peuvent être prises séparément ou en combinaison, et notamment :
- en cas de rejet d'une entité présentant le niveau de priorité le plus élevé (éventuellement par l'utilisateur au moyen de l'interface homme/machine), ses moyens de gestion peuvent être chargés de choisir une nouvelle entité satisfaisant aux clés de tri mais associée à un niveau de priorité immédiatement inférieur au niveau de priorité de l'entité rejetée, et éventuellement d'alimenter l'interface homme/machine au moins avec les premières données représentant cette nouvelle entité ;
- ses moyens de gestion peuvent être chargés de transmettre certaines au moins des deuxièmes données à un équipement d'un réseau de communication, auquel il est rattaché, afin qu'il détermine les quatrièmes données qui représentent les zones géographiques dans lesquelles sont implantées les entités correspondantes ;
- son interface homme/machine peut être chargée de permettre à un utilisateur de communiquer des troisièmes données correspondant à des entités choisies, puis de communiquer ces troisièmes données aux moyens de gestion afin qu'ils les stockent en correspondance des premières données qui représentent les entités correspondantes ;
- il peut comprendre des moyens de localisation chargés de déterminer sa position. Dans ce cas, ses moyens de gestion peuvent être chargés de déterminer auprès des moyens de localisation la position du terminal afin de définir une zone géographique à partir de cette position, puis d'utiliser cette zone géographique en tant que clé de tri ;
- son interface homme/machine peut être chargée de permettre à un utilisateur de définir une zone géographique destinée à être utilisée par ses moyens de gestion en tant que clé de tri ;
- les entités peuvent par exemple être choisies parmi des personnes physiques ou morales, des activités et des services.

L'invention est particulièrement bien adaptée, bien que de façon non exclusive, aux terminaux de communication capables d'établir des communications radio avec au moins un réseau d'accès radio.

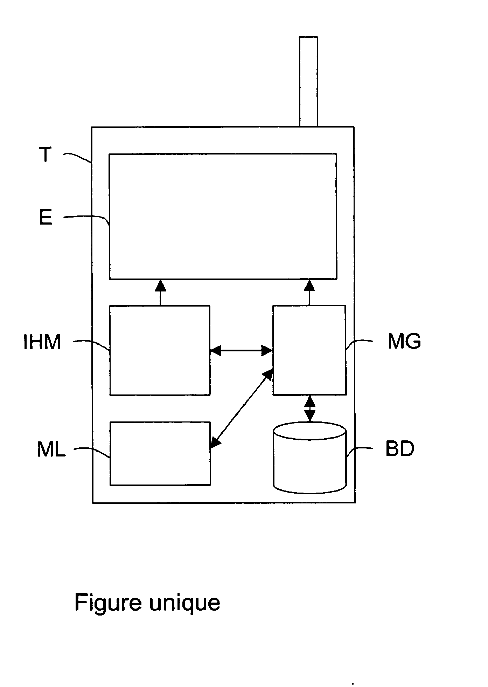

D'autres caractéristiques et avantages de l'invention apparaîtront à l'examen de la description détaillée ci-après, et du dessin annexé, sur lequel l'unique figure illustre de façon très schématique un exemple de réalisation d'un terminal de communication selon l'invention, agencé sous la forme d'un téléphone mobile. Le dessin annexé pourra non seulement servir à compléter l'invention, mais aussi contribuer à sa définition, le cas échéant.

L'invention est destinée à faciliter la sélection d'une entité, stockée dans le répertoire (ou annuaire) électronique d'un terminal de communication, en fonction des besoins. On considère dans ce qui suit que le terminal de communication (T) est un téléphone mobile (ou cellulaire). Mais, l'invention n'est pas limitée à ce type de terminal de communication. Elle concerne en effet tout équipement de communication, radio ou filaire, fixe ou mobile (ou portable) capable de se connecter à un réseau de communication, via au moins un réseau d'accès radio, afin d'échanger des données sous la forme de signaux (éventuellement radio), avec un autre terminal ou un équipement de réseau. Il pourra donc également (et notamment) s'agir d'un téléphone fixe, ou d'un ordinateur fixe ou portable ou d'un assistant personnel numérique (ou PDA) équipé d'un module de communication.

Comme cela est illustré sur l'unique figure, un terminal de communication T selon l'invention (ici un téléphone mobile) comporte notamment une interface homme/machine IHM, un écran d'affichage E, un module de mémorisation BD et un module de gestion MG.

L'interface homme/machine IHM est destinée à permettre l'affichage de données sur l'écran E et la navigation parmi ces données affichées afin qu'un utilisateur puisse sélectionner certaines d'entre elles. Il s'agit d'une interface tout à fait classique comprenant, par exemple, un clavier muni de touches de saisie et de touches de fonction (notamment dédiées au déplacement d'un curseur au sein de menus destinés à être affichés sur l'écran E).

Le module de mémorisation BD est destiné à stocker des premières données représentatives d'identifiants d'entités en correspondance de deuxièmes données représentatives d'identifiants de communication, sous le contrôle du module de gestion MG. Ces premières et deuxièmes données constituent ensemble une partie d'un répertoire (ou annuaire) électronique.

Ce module de mémorisation BD peut être agencé sous n'importe quelle forme, et notamment sous la forme d'une mémoire ou d'une base de données.

Des premières données représentatives de tout type d'entité peuvent être stockées dans le module de mémorisation BD, et notamment des entités de type personne physique (nom patronymique), ou personne morale (nom d'entreprise), ou activité (par exemple médecin ou serrurier), ou service (par exemple « secours de proximité » ou « secours d'urgence »).

Quant aux deuxièmes données, elles représentent n'importe quel type d'identifiant de communication, comme par exemple un numéro de téléphone (fixe ou mobile) ou une adresse électronique (e-mail, message court (SMS), ou analogue).

Le module de gestion MG est chargé d'accéder aux données qui sont stockées dans le module de mémorisation BD afin d'alimenter l'interface homme/machine IHM avec certaines au moins des données stockées.

Le module de mémorisation BD est également chargé de stocker des troisièmes données en correspondance des premières et deuxièmes données. Ces troisièmes données sont représentatives des services, activités ou fonctions qui sont assuré(e)s par les entités représentées par les premières données, ainsi que des zones géographiques dans lesquelles sont implantées ces entités.

Les services ici visés peuvent être de tout type, comme par exemple « aide à domicile », « médecine », « dépannage » ou « urgence ». Les activités ici visées peuvent être de tout type, comme par exemple « serrurier », « plombier », « garagiste », « gardien », « assistante de vie », « généraliste », « ophtalmologiste » ou « dentiste ». Les fonctions ici visées peuvent être de tout type, comme par exemple « agent de maintenance », « responsable du personnel », « chef de service », « assistante de direction » ou « directeur général ».

Lorsque des premières données représentent une entité de type service (comme par exemple médecin ou serrurier) et non pas un nom, les troisièmes données représentatives des services, activités ou fonctions peuvent être éventuellement complémentaires des premières données (par exemple dans le but de préciser une sous-classe de service, telle que généraliste ou ophtalmologiste).

Conformément à l'invention, en présence de ces troisièmes données le module de gestion est chargé de sélectionner dans le module de mémorisation BD des premières données qui satisfont, conjointement avec des troisièmes données correspondantes, à des clés de tri relatives à au moins un service, une activité ou une fonction et à au moins une zone géographique.

L'expression « clé de tri » désigne ici un critère de sélection.

Par exemple, le module de gestion MG fournit à l'utilisateur, via l'interface homme/machine IHM et l'écran E, un menu de sélection de clés de tri. On peut également envisager que l'utilisateur puisse définir certaines clés de tri ou certaines combinaisons de clés de tri au moyen de l'interface homme/machine IHM.

Parmi les très nombreuses clés de tri possibles, relatives aux services, activités ou fonctions, on peut par exemple citer la « liste des médecins généralistes » ou la « liste des serruriers » ou encore la « liste des services d'urgence ».

Parmi les clés de tri possibles, relatives à la zone géographique d'intervention, on peut par exemple citer « le lieu où se trouve situé le téléphone mobile T », « le lieu de travail », « le domicile », « la résidence secondaire », ou « n'importe où ». L'utilisateur du téléphone mobile T peut donc demander au module de gestion MG de lui proposer une entité du répertoire électronique qui correspond, notamment, à une clé de tri relative à une zone géographique d'intervention distante du lieu où il se trouve ou bien correspondant à ce lieu.

Les clés de tri relatives à la zone géographique d'intervention peuvent être soit prédéfinies, soit définies par l'utilisateur lorsqu'il souhaite que le module de gestion MG effectue une recherche dans le répertoire électronique de son téléphone mobile T.

Afin de prédéfinir une clé de tri relative à une zone géographique le module de gestion MG doit soit requérir la position de cette zone géographique auprès du réseau de rattachement de son téléphone mobile T, soit effectuer une procédure de calibration.

La procédure de calibration est particulièrement bien adaptée à la détermination des positions des zones géographiques dans lesquelles l'utilisateur évolue fréquemment, comme par exemple son domicile ou son lieu de travail.

Pour que le module de gestion MG effectue une procédure de calibration relative à une zone géographique, il est avantageux que son téléphone mobile T se trouve momentanément situé dans cette zone géographique pour en déterminer la position. Le module de gestion MG peut en effet déterminer la position de son téléphone mobile T auprès d'un module de localisation ML qui est implanté dans ce dernier. On entend ici par « module de localisation », le module embarqué qui est classiquement chargé de déterminer la position du téléphone mobile T en fonction de la position de la cellule dans laquelle il est implanté et des positions des cellules voisines. Ce module de localisation ML est habituellement chargé de transmettre au réseau mobile, et plus précisément à son serveur de localisation, les positions successives de son téléphone mobile T chaque fois que celui-ci pénètre dans une nouvelle cellule, afin qu'il puisse se servir de ces positions pour faciliter les connexions vers ledit téléphone mobile T.

Bien entendu, le module de gestion MG pourrait déterminer les positions de son téléphone mobile T auprès d'autres moyens de positionnement, comme par exemple un module embarqué de positionnement par satellites (éventuellement de type GPS), voire même auprès de son réseau de rattachement.

Lorsque le module de gestion MG dispose de la position de son téléphone mobile T, il peut définir la position (ou l'ensemble de positions) d'une zone géographique contenant ledit téléphone mobile T, puis l'associer sous le contrôle de l'utilisateur à une clé de tri prédéfinie dont il stocke les données qui la représentent, par exemple dans le module de mémorisation BD.

Les quatrièmes données relatives à la position d'une zone géographique ne sont pas forcément présentes dans le module de mémorisation BD au moment où le module de gestion MG doit procéder à la sélection d'une entité dans le répertoire électronique, à la requête de l'utilisateur.

En effet, ces quatrièmes données, relatives à la position d'une zone géographique, peuvent être soit fournies préalablement, soit déterminées au moment de la sélection.

La fourniture préalable concerne essentiellement les entités dont les numéros de téléphone correspondent à des réseaux fixes. Dans ce cas, la position de la zone géographique dans laquelle se trouve située l'entité fixe peut être fournie par l'utilisateur au moyen de l'interface homme/machine IHM ou bien par le réseau. Le module de gestion MG est chargé de stocker dans le module de mémorisation BD, en correspondance des premières et deuxièmes données de l'entité fixe concernée, les quatrièmes données qui représentent la position fournie de sa zone géographique d'implantation.

La détermination d'une position au moment de la sélection concerne toutes les entités, qu'elles soient associées à un identifiant de communication fixe ou mobile. Elle se fait de préférence après que le module de gestion MG ait appliqué la ou les clés de tri relatives aux services, activités ou fonctions.

La position de la zone géographique dans laquelle se trouve située une entité fixe peut être fournie par l'utilisateur au moyen de l'interface homme/machine IHM ou bien par le réseau. La position de la zone géographique dans laquelle se trouve située une entité mobile ne peut être fournie que par le réseau. Dans ce dernier cas, le module de gestion MG doit transmettre au réseau les deuxièmes données qui représentent l'identifiant de communication du terminal mobile concerné afin qu'il détermine dans un équipement de réseau, tel qu'un serveur de localisation, la position en cours de ce terminal mobile.

Lorsque le module de gestion MG dispose des quatrièmes données, représentant les positions des zones géographiques dans lesquelles sont implantés les terminaux de communication des entités sélectionnées au moyen des clés de tri relatives aux services, activités ou fonctions, il peut alors appliquer à ces entités la clé de tri choisie par l'utilisateur, relative à l'appartenance à une ou plusieurs zones géographiques. Lorsque l'utilisateur signale au module de gestion MG qu'il veut effectuer une recherche parmi les entités qui sont implantées dans la zone géographique où il se trouve momentanément situé, ledit module de gestion MG peut déterminer la position de son téléphone mobile T, par exemple auprès du module de localisation ML, puis définir à partir de celle-ci la position (ou l'ensemble de positions) de cette zone géographique de manière à l'utiliser en tant que clé de tri.

La recherche d'une entité prend également en compte des niveaux de priorité liés à des préférences de l'utilisateur. A cet effet, le module de mémorisation BD doit stocker, en correspondance de premières données choisies, des cinquièmes données qui représentent les niveaux de priorité associés aux entités représentées par ces premières données.

Les cinquièmes données qui représentent ces niveaux de priorité sont fournies par l'utilisateur au moyen de l'interface homme/machine IHM.

Grâce à de telles cinquièmes données, le module de gestion MG applique les clés de tri relatives aux services, activités ou fonctions, et à l'appartenance à une ou plusieurs zones géographiques, puis, s'il reste au moins deux entités, il choisit celle qui dispose du niveau de priorité le plus élevé. Le module de gestion MG transmet alors à l'interface homme/machine IHM le résultat de sa recherche afin qu'il l'affiche sur l'écran E.

A ce stade, plusieurs possibilités peuvent être envisagées.

L'utilisateur peut accepter ou refuser le résultat de la recherche. Par exemple, lorsque la recherche porte sur une situation d'urgence, l'utilisateur peut estimer que l'entité sélectionnée par le module de gestion MG, par exemple le SAMU, est inadaptée à la situation. Dans ce cas, l'utilisateur peut demander au module de gestion MG de lui fournir les données relatives à l'entité qui satisfait également aux clés de tri appliquées, mais dont le niveau de priorité est immédiatement inférieur au niveau de priorité de l'entité initialement proposée. Plusieurs refus successifs peuvent être envisagés, et dans certains cas une nouvelle recherche peut être rendue obligatoire, sur la base de clés de tri au moins partiellement nouvelles.

Lorsque l'utilisateur accepte le choix d'entité qui lui est proposé par le module de gestion MG, ce dernier en averti son téléphone mobile T, qui tente alors d'établir la communication avec le terminal de communication désigné par les deuxièmes données stockées dans le module de mémorisation BD en correspondance des premières données représentant l'entité acceptée.

Une variante consiste à autoriser le module de gestion MG à demander automatiquement à son téléphone mobile T de tenter d'établir la communication avec le terminal de communication déterminé lors de la recherche et disposant du niveau de priorité le plus élevé.

Si un terminal de communication ne répond pas ou est occupé, le module de gestion MG peut demander à son téléphone mobile T, automatiquement ou après accord de l'utilisateur, de tenter d'établir la communication avec un autre terminal de communication déterminé lors de la recherche et disposant du niveau de priorité immédiatement inférieur à celui du terminal injoignable ou occupé.

Par exemple, en cas de malaise on peut contacter en priorité un voisin, et s'il ne répond pas ou si sa ligne est occupée on appelle l'entité suivante en terme de priorité, laquelle peut par exemple correspondre au médecin traitant.

Pour mettre en oeuvre cette fonctionnalité, on peut par exemple prévoir une touche dédiée (« entité suivante ») permettant à l'utilisateur, lorsqu'il l'actionne ou l'active, de signaler au module de gestion MG qu'il souhaite que l'on appelle l'entité qui suit, en terme de priorité, l'entité qui est injoignable ou qui ne répond pas. En variante, le module de gestion MG peut être configuré de manière à appeler automatiquement (sans accord préalable de l'utilisateur) l'entité qui suit, en terme de priorité, l'entité dont la ligne est occupée ou qui est considérée comme injoignable au bout d'un nombre de sonneries choisi (par exemple égal à 10, et éventuellement configurable). Il est important de noter que certaines au moins des premières, deuxièmes et troisièmes données, et quatrièmes données, stockées dans le module de mémorisation BD, peuvent être téléchargées via le réseau de rattachement du téléphone mobile T. Cela permet ainsi à un utilisateur, lorsque son répertoire électronique ne comporte pas d'entité pouvant répondre à ses besoins ou bien lorsqu'il souhaite enrichir son répertoire électronique indépendamment d'une recherche, de télécharger dans le module de mémorisation BD de son téléphone mobile T, via le réseau de rattachement dont il est client, des premières, deuxièmes et éventuellement troisièmes données et quatrièmes données représentant des entités appartenant à une ou plusieurs catégories professionnelles, afin que ces données puissent être utilisées par le module de gestion MG lors de ses recherches d'entités (futures ou en cours).

Le module de gestion MG et/ou le module de mémorisation BD peuvent être réalisés sous la forme de circuits électroniques, de modules logiciels (ou informatiques), ou d'une combinaison de circuits et de logiciels.

L'invention ne se limite pas aux modes de réalisation de terminal de communication décrits ci-avant, seulement à titre d'exemple, mais elle englobe toutes les variantes que pourra envisager l'homme de l'art dans le cadre des revendications ci-après. Ainsi, dans la description qui précède on a décrit une mise en oeuvre de l'invention dans le cas d'un terminal de communication de type téléphone mobile. Mais, l'invention n'est pas limitée à ce type de terminal de communication. Elle concerne en effet tout équipement de communication, radio ou filaire, fixe ou mobile (ou portable) capable de se connecter à un réseau de communication, via au moins un réseau d'accès radio, afin d'échanger des données sous la forme de signaux (éventuellement radio), avec un autre terminal ou un équipement de réseau. Il pourra donc également (et notamment) s'agir d'un téléphone fixe, ou d'un ordinateur fixe ou portable ou d'un assistant personnel numérique (ou PDA) équipé d'un module de communication. Bien entendu, lorsque le terminal de communication n'est pas mobile (ou portable), certaines fonctionnalités décrites ci-avant et relatives à la mobilité ne pourront pas être mises en oeuvre.

## Revendications

1. Terminal de communication (T), comportant :
i) une interface homme/machine (IHM) permettant d'afficher des données sur un écran (E) et de naviguer parmi ces données affichées afin de permettre à un utilisateur de sélectionner certaines d'entre elles,
ii) des moyens de mémorisation (BD) propres à stocker des premières données représentatives d'identifiants d'entités en correspondance de deuxièmes données représentatives d'identifiants de communication, de troisièmes données représentatives de services, activités, ou fonctions, assuré(e)s par lesdites entités, de quatrièmes données représentatives de zones géographiques dans lesquelles sont implantées lesdites entités, et de cinquièmes données représentatives de niveaux de priorité associés auxdites entités représentées par lesdites premières données, et
iii) des moyens de gestion (MG) agencés pour accéder aux données stockées dans lesdits moyens de mémorisation (BD) afin d'alimenter ladite interface (IHM) avec certaines au moins desdites données stockées, lesdits moyens de gestion (MG) étant agencés pour sélectionner, dans lesdits moyens de mémorisation (BD), des premières données qui satisfont, conjointement avec lesdites quatrièmes données correspondantes, à des clés de tri relatives à au moins un service, une activité ou une fonction et à au moins une zone géographique, et, en présence de premières données représentatives d'au moins deux entités satisfaisant auxdites clés de tri, pour choisir celles qui représentent l'entité disposant du niveau de priorité le plus élevé ;
**caractérisé en ce que** lesdits moyens de gestion (MG) sont agencés pour permettre à un utilisateur de définir des clés de tri via ladite interface homme/machine (IHM).

2. Terminal selon la revendication 1, **caractérisé en ce que** lesdits moyens de gestion (MG) sont agencés, en cas de rejet d'une entité présentant le niveau de priorité le plus élevé, pour choisir une nouvelle entité satisfaisant auxdites clés de tri mais associée à un niveau de priorité immédiatement inférieur audit niveau de priorité de l'entité rejetée.

3. Terminal selon la revendication 2, **caractérisé en ce que** lesdits moyens de gestion (MG) sont agencés pour alimenter ladite interface homme/machine (IHM) au moins avec les premières données représentant ladite nouvelle entité choisie.

4. Terminal selon la revendication 1, **caractérisé en ce que** lesdits moyens de gestion (MG) sont agencés pour transmettre certaines au moins desdites deuxièmes données à un équipement d'un réseau de communication, auquel est rattaché ledit terminal (T), afin qu'il détermine les quatrièmes données, représentatives des zones géographiques dans lesquelles sont implantées les entités correspondantes.

5. Terminal selon la revendication 1, **caractérisé en ce que** ladite interface homme/machine (IHM) est agencée pour permettre à un utilisateur de communiquer des troisièmes données correspondant à des entités choisies, puis pour communiquer ces troisièmes données auxdits moyens de gestion (MG) afin qu'ils les stockent en correspondance des premières données représentant les entités correspondantes.

6. Terminal selon la revendication 1, **caractérisé en ce qu'**il comprend des moyens de localisation (ML) agencés pour déterminer la position dudit terminal, et **en ce que** lesdits moyens de gestion (MG) sont agencés pour déterminer auprès desdits moyens de localisation (ML) la position dudit terminal (T) de manière à définir une zone géographique à partir de cette position, puis utiliser cette zone géographique en tant que clé de tri.

7. Terminal selon la revendication 1, **caractérisé en ce que** ladite interface homme/machine (IHM) est agencée pour permettre à un utilisateur de définir une zone géographique destinée à être utilisée par lesdits moyens de gestion (MG) en tant que clé de tri.

8. Terminal selon l'une des revendications 1 à 7, **caractérisé en ce que** lesdites entités sont choisies dans un groupe comprenant des personnes physiques ou morales, des activités et des services.

9. Terminal selon l'une des revendications 1 à 7, **caractérisé en ce qu'**il est agencé pour établir des communications radio avec un réseau d'accès radio.

## Claims

1. A communication terminal (T), comprising:
i) a human/machine interface (IHM) for displaying data on a screen (E) and for browsing among that displayed data in order to enable a user to select some of the information,
ii) memorization means (BD) capable of storing first data representative of entity identifiers, corresponding to second data representative of communication identifiers, third data representative of services, activities, or functions provided by said entities, fourth data representative of geographic areas in which said entities are located, and fifth data representative of levels of priority associated with said entities represented by said first data, and
iii) management means (MG) configured to access the data stored in said memorization means (BD) in order to supply said interface (IHM) with at least some of said stored data, said management means (MG) being configured to select, within said memorization means (BD), first data which satisfy, in conjunction with said corresponding fourth data, sorting keys regarding at least one service, activity, or function, and at least one geographic area, and, in the presence of first data representative of at least two entities that satisfy said sorting keys, to choose those which represent the entity having the highest level of priority;
**characterized in that** said management means (MG) are configured to enable a user to define sorting keys via said human/machine interface (HMI).

2. A terminal according to claim 1, **characterized in that** said management means (MG) are configured, in the event that an entity with the highest level of priority is rejected, to choose a new entity satisfying said sorting keys that is associated with a level of priority immediately less than said level of priority of the rejected entity.

3. A terminal according to claim 2, **characterized in that** said management means (MG) are configured to supply said human/machine interface (HMI) at least with the first data representing said new chosen entity.

4. A terminal according to claim 1, **characterized in that** said management means (MG) are configured to transmit at least some of said second data to a device of a communication network, to which said terminal (T) is connected, so that it can determine the fourth data representative of the geographic areas in which the corresponding entities are located.

5. A terminal according to claim 1, **characterized in that** said human/machine interface (HMI) is configured to enable a user to communicate their data corresponding to chosen entities, then to communicate this third data to said management means (MG) so that it may store them matching the first data representing the corresponding entities.

6. A terminal according to claim 1, **characterized in that** it comprises location means (ML) configured to determine the position of said terminal, and **in that** said management means (MG) are configured to determine from said location means (ML) the position of said terminal (T) so as to define a geographic area from that position, then to use that geographic area as a sorting key.

7. A terminal according to claim 1, **characterized in that** said human/machine interface (HMI) is configured to enable a user to define a geographic area intended to be used by said management means (MG) as a sorting key.

8. A terminal according to claim 1 to 7, **characterized in that** said entities are chosen from among a group comprising artificial or natural persons, activities, and services.

9. A terminal according to claim 1 to 7, **characterized in that** it is configured to establish radio communications with a radio access network.

## Patentansprüche

1. Kommunikationsendgerät (T), umfassend:
i) Eine Schnittstelle Mensch-Maschine (IHM) zum Anzeigen von Daten auf einem Monitor (E) und zum Surfen zwischen diesen angezeigten Daten, um es einem Benutzer zu ermöglichen, bestimmte dieser Daten auszuwählen,
ii) Speichermittel (BD) zum Speichern von ersten Daten, welche für die Kennungen von Entitäten repräsentativ sind, in Übereinstimmung mit zweiten Daten, welche für Kommunikationskennungen repräsentativ sind, mit dritten Daten, welche für von den besagten Entitäten gewährleistete Dienste, Aktivitäten oder Funktionen repräsentativ sind, mit vierten Daten, welche für die geografischen Zonen, in welchen sich die besagten Entitäten befinden, repräsentativ sind, und mit fünften Daten, welche für die Prioritätsgrade, welche den besagten durch die besagten ersten Daten dargestellten Entitäten zugeordnet sind, repräsentativ sind, und
iii) Verwaltungsmittel (MG), welche dazu ausgelegt sind, auf die in den besagten Speichermitteln (BD) gespeicherten Daten zuzugreifen, um die besagte Schnittstelle (IHM) mit zumindest bestimmten der besagten gespeicherten Daten zu versorgen, wobei die besagten Speichermittel (MG) dazu ausgelegt sind, in den besagten Speichermitteln (BD) erste Daten auszuwählen, die, zusammen mit den besagten entsprechenden vierten Daten, Sortierschlüsseln, welche mindestens einen Dienst, eine Aktivität oder eine Funktion betreffen, und zumindest einer geografischen Zone entsprechen, und, wenn erste Daten, die für mindestens zwei den besagten Sortierschlüsseln entsprechende Entitäten repräsentativ sind, vorhanden sind, diejenigen auszuwählen, die die Entität, welche den höchsten Prioritätsgrad aufweist, darstellen auszuwählen;
**dadurch gekennzeichnet, dass** die besagten Verwaltungsmittel (MG) dazu ausgelegt sind, es einem Benutzer zu ermöglichen, Sortierschlüssel über die besagte Schnittstelle Mensch-Maschine (IHM) zu definieren.

2. Endgerät nach Anspruch 1, **dadurch gekennzeichnet, dass** die besagten Verwaltungsmittel (MG) dazu ausgelegt sind, im Fall des Ablehnens einer Entität, welche den höchsten Prioritätsgrad aufweist, eine neue Entität auszuwählen, welche den besagten Sortierschlüsseln entspricht, jedoch einen unmittelbar unter dem besagten Prioritätsgrad der abgelehnten Entität liegenden Prioritätsgrad aufweist.

3. Endgerät nach Anspruch 2, **dadurch gekennzeichnet, dass** die besagten Verwaltungsmittel (MG) dazu ausgelegt sind, die besagte Schnittstelle Mensch-Maschine (IHM) zumindest mit den ersten Daten, welche die besagte ausgewählte neue Entität darstellen, zu versorgen.

4. Endgerät nach Anspruch 1, **dadurch gekennzeichnet, dass** die besagten Verwaltungsmittel (MG) dazu ausgelegt sind, zumindest bestimmte der besagten zweiten Daten an ein Gerät eines Kommunikationsnetzwerks, an welches das besagte Endgerät (T) angebunden ist, zu übertragen, damit es die vierten Daten, welche für geografische Zonen, in welchen sich die besagten entsprechenden Entitäten befinden, repräsentativ sind, ermittelt.

5. Endgerät nach Anspruch 1, **dadurch gekennzeichnet, dass** die besagte Schnittstelle Mensch-Maschine (IHM) dazu ausgelegt ist, es einem Benutzer zu ermöglichen, dritte Daten, welche ausgewählten Entitäten entsprechen, zu übermitteln und diese dritten Daten anschließend an die besagten Verwaltungsmittel (MG) zu übermitteln, damit sie diese in Übereinstimmung mit den ersten Daten, welche die entsprechenden Entitäten darstellen, speichern.

6. Endgerät nach Anspruch 1, **dadurch gekennzeichnet, dass** es Ortungsmittel (ML) umfasst, welche dazu ausgelegt sind, die Position des besagten Endgeräts zu bestimmen, und dass die besagten Verwaltungsmittel (MG) dazu ausgelegt sind, an den besagten Ortungsmitteln (ML) die Position des besagten Endgeräts (T) zu ermitteln, um ausgehend von dieser Position eine geografische Zone zu bestimmen und diese geografische Zone anschließend als Sortierschlüssel zu verwenden.

7. Endgerät nach Anspruch 1, **dadurch gekennzeichnet, dass** die besagte Schnittstelle Mensch-Maschine (IHM) dazu ausgelegt ist, es einem Benutzer zu ermöglichen, eine geografische Zone zu definieren, welche für die Verwendung durch die besagten Verwaltungsmittel (MG) als Sortierschlüssel bestimmt ist..

8. Endgerät nach einem der Ansprüche 1 bis 7, **dadurch gekennzeichnet, dass** die besagten Entitäten in einer Gruppe bestehend aus natürlichen oder juristischen Personen, Aktivitäten und Diensten gewählt werden.

9. Endgerät nach einem der Ansprüche 1 bis 7, **dadurch gekennzeichnet, dass** es dazu ausgelegt ist, Funkkommunikationen mit einem Funkzugangsnetz herzustellen.
